(19) Europäisches Patentamt
European Patent Office
Office européen des brevets

(11) **EP 1 892 412 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(51) Int Cl.:
*F03D 7/04* (2006.01)   *F03D 9/00* (2006.01)
*H02J 3/18* (2006.01)

(21) Anmeldenummer: **07015148.5**

(22) Anmeldetag: **02.08.2007**

(54) **Verfahren zum Betreiben von Windenergieanlagen**

Method for operating wind farms

Procédé de fonctionnement d'éoliennes

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.08.2006 DE 102006039693**

(43) Veröffentlichungstag der Anmeldung:
**27.02.2008 Patentblatt 2008/09**

(73) Patentinhaber: **Nordex Energy GmbH**
**22848 Norderstedt (DE)**

(72) Erfinder:
• **Richter, Kay**
**22846 Norderstedt (DE)**
• **Woldmann, Thomas Paul**
**2129 Hamburg (DE)**
• **Jurkat, Mark**
**22846 Norderstedt (DE)**

(74) Vertreter: **Hauck Patent- und Rechtsanwälte**
**Neuer Wall 50**
**20354 Hamburg (DE)**

(56) Entgegenhaltungen:
**DE-A1- 10 019 362     DE-A1- 10 136 974**

• **TAPIA G ET AL: "A new simple and robust control strategy for wind farm reactive power regulation" PROCEEDINGS OF THE 2002 IEEE INTERNATIONAL CONFERENCE ON CONTROL APPLICATIONS. CCA 2002. GLASCOW, SCOTLAND, U.K. , SEPT. 18 - 20, 2002, IEEE INTERNATIONAL CONFERENCE ON CONTROL APPLICATIONS, NEW YORK, NY : IEEE, US, Bd. 2, 18. September 2002 (2002-09-18), Seiten 880-885, XP010606090 ISBN: 0-7803-7386-3**

• **RABELO B ET AL: "Control of an optimized power flow in wind power plants with doubly-fed induction generators" PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003, ANNUAL POWER ELECTRONICS SPECIALISTS CONFERENCE, NEW YORK, NY : IEEE, US, Bd. VOL. 4 OF 4. CONF. 34, 15. Juni 2003 (2003-06-15), Seiten 1563-1568, XP010648463 ISBN: 0-7803-7754-0**

**Beschreibung**

Die Erfindung betrifft ein Verfahren zum Betreiben von Windenergieanlagen, genauer ein Verfahren zum Betreiben einer Windenergieanlage mit regelbarer Wirkleistung, wobei jeder Wirkleistung ein Blindleistungsintervall zugeordnet ist und die abgegebene Blindleistung innerhalb dieses Blindleistungsintervalls steuerbar ist.

Bei dem Betrieb von Windenergieanlagen ist bekannt, neben der für die Energiegewinnung maßgeblichen Wirkleistung auch Blindleistung zu erzeugen. Die Blindleistung kann einerseits dazu dienen, einen durch einzelne Komponenten der Windenergieanlage selbst hervorgerufenen Blindwiderstand zu kompensieren, um ein mit der Windenergieanlage gekoppeltes Versorgungsnetz nicht damit zu belasten. Zusätzlich kann durch ein gezieltes Bereitstellen von Blindleistung auch eine Stützung der Spannung des Versorgungsnetzes erreicht werden. Üblicherweise wird die Blindleistung durch Vorgabe eines sogenannten Leistungsfaktors cos φ bestimmt, der einen bestimmten Wertebereich überstreichen kann, z.B. von 0,95 kapazitiv bis 0,95 induktiv. Der Phasenwinkel φ beschreibt dabei die Phasenverschiebung zwischen Spannung und Strom. Der Leistungsfaktor cos φ entspricht dann dem Verhältnis aus Wirkleistung P und Scheinleistung S:

$$\cos \varphi = P \,/\, S.$$

Für die Scheinleistung S gilt dabei der Zusammenhang:

$$S^2 = P^2 + Q^2.$$

Für einen vorgegebenen Leistungsfaktor ist die Blindleistung der Wirkleistung proportional, so daß bei geringer Wirkleistung in der Regel nur eine geringe Blindleistung zur Verfügung gestellt wird. Sofern der Leistungsfaktor fest vorgegeben ist, beispielsweise vom Betreiber des Versorgungsnetzes, kann dadurch im Teillastbetrieb nicht die maximal mögliche Blindleistung erzeugt werden.

Gleichzeitig müssen die elektrischen Komponenten der Windenergieanlage so ausgelegt sein, daß der sich bei der maximalen Wirk- und Blindleistung einstellende Stromfluß nicht zu einer Überlastung führt. In der Regel sind die elektrischen Komponenten so auszulegen, daß sie der Belastung selbst bei kurzzeitig über der Nennleistung liegender Wirkleistung und gleichzeitiger maximaler Blindleistung standhalten.

Bei den bekannten Windenergieanlagen ergibt sich die erzeugte Wirkleistung grundsätzlich aus den Windverhältnissen. Um die Windenergieanlage bei hohen Windgeschwindigkeiten vor einer Überlastung zu schützen, wird die Wirkleistung auf einen Maximalwert begrenzt. Es erfolgt dazu in der Regel eine Drehzahlregelung des Rotors bzw. Generators durch Variieren des Anstellwinkels der Rotorblätter bei vorgegebenem, maximalem Drehmoment, wodurch die Wirkleistung auf den gewünschten Maximalwert geregelt wird.

Aus DE 100 59 018 A1 ist ein Verfahren zum Betreiben einer Windenergieanlage bekannt, bei dem die Regelung der Blindleistung in Abhängigkeit von der im wesentlichen durch die Windverhältnisse bestimmten Wirkleistung so erfolgt, daß sich eine konstante Scheinleistung einstellt. Die Scheinleistung der Windenergieanlage ist damit unabhängig vom Windangebot. Bei dem bekannten Verfahren ist auch vorgesehen, von der konstanten Scheinleistung abzuweichen, wenn die abgegebene Wirkleistung oder Blindleistung einen vorgegebenen Maximalwert nicht überschreiten soll.

Aus EP 1 508 951 A1 ist ein Verfahren zum Betreiben eines Windparks mit einer Vielzahl von Windenergieanlagen bekannt, die untereinander vernetzt sind und über einen Netzknotenpunkt Wirk- und Blindleistung in ein Versorgungsnetz einspeisen. Dabei werden von einer übergeordneten Steuerung Sollwerte für die Wirk- und Blindleistung einzelner Windenergieanlagen vorgegeben. Ziel ist, die Spannung an dem Netzknotenpunkt zu stützen, indem der gesamte Windpark an diesem Netzknotenpunkt eine bestimmte Blindleistung zur Verfügung stellt, und gleichzeitig durch eine optimierte Verteilung der zu erzeugenden Wirk- und Blindleistungen auf die einzelnen Windenergieanlagen die Belastung des diese Anlagen verbindenden Netzes gering zu halten und Verluste darin zu minimieren. Die von einer einzelnen Windenergieanlage bereitgestellte Blindleistung kann dabei für einen bestimmten Wirkleistungswert innerhalb eines von der maximal zulässigen Stromstärke in den Rotor- und Statorwicklungen des Generators abhängigen Bereichs liegen. Insbesondere ist es dadurch möglich, auch bei geringen Wirkleistungen eine hohe Blindleistung bereitzustellen.

Aus DE 103 44 392 A1 ist eine Windenergieanlage mit einem Blindleistungssteuermodul und einer Einrichtung zur Bestimmung einer Sicherheitsmindestwirkleistung bekannt. Ausgehend von einem für die Stützung des Netzes bei Spannungsrückgängen erwünschten Stützblindstrom steuert das Blindleistungssteuermodul die in das Netz eingespeiste Blindleistung. Dabei wird einerseits dafür Sorge getragen, daß die eingespeiste Wirkleistung nicht unter einen von der Einrichtung zur Bestimmung einer Sicherheitsmindest-wirkleistung vorgegebenen Mindestwert absinkt, andererseits wird ein fest vorgegebener, maximaler Scheinstrom berücksichtigt. In einem mehrstufigen Berechnungsverfahren werden die Sollwerte für Wirk- und Blindstrom korrigiert.

Aus der Druckschrift TAPIA G ET AL: "A new simple and robust control strategy for wind farm reactive power regulation" (PROCEEDINGS OF THE 2002 IEEE INTERNATIONAL CONFERENCE ON CONTROL APPLICATIONS. CCA 2002. GLASGOW; SCOTLAND, U. K., SEPT. 18-20, 2002, IEEE INTERNATIONAL CONFERENCE ON CONTROL APPLICATIONS, NEW YORK, NY: IEEE, US, Bd. 2, 18. September 2002 (2002-09-18), Seiten 880-885, XP010606090 ISBN: 0-7803-7386-3) ist ein Verfahren zum Betreiben einer Windenergieanlage mit regelbarer Wirkleistung bekannt, bei dem die Ist-Blindleistung innerhalb eines Blindleistungsintervalls steuerbar ist. Das bekannte Verfahren geht von einer aktuell erreichten Wirkleistung, die sich im wesentlichen aus den Windverhältnissen ergibt, und einer extern vorgegebenen, erwünschten Blindleistung aus. Für jede Windenergieanlage des betrachteten Windparks wird davon ausgehend ein Sollwert für die Blindleistung berechnet. Anschließend wird überprüft, ob dieser vorgegebene Sollwert für die Blindleistung einer einzelnen Windenergieanlage in den zulässigen Bereich einer für die jeweilige Windenergieanlage ermittelten P-Q-Kurve fällt. Die P-Q-Kurve wurde zuvor auf Grundlage der thermischen Belastbarkeit der Anlage ermittelt und berücksichtigt als Parameter eine Betriebstemperatur. Liegt die vorgegebene Soll-Blindleistung außerhalb des zulässigen Bereichs, findet eine Begrenzung der Blindleistung statt.

Aus der Druckschrift DE 101. 36 974 A1 ist ein Verfahren zum Betreiben einer Windenergieanlage bekannt, bei dem der Phasenwinkel der in ein Netz abgegebenen Leistung in Abhängigkeit von wenigstens einer im Netz erfassten Spannung verändert wird. Auf diese Weise soll die Spannung an dem Spannungserfassungpunkt des Netzes durch ein Einspeisen induktiver oder kapazitiver Blindleistung stabilisiert werden.

Aus der Druckschrift DE 100 19 362 A1 ist ein Verfahren zum Betrieb von Pulsumrichtern mit Spannungszwischenkreis bekannt. Bei dem bekannten Verfahren wird zur Einstellung der Leistung des Generators die zum Netz geführte Wirkleistung durch einen Controller mittels gemessener Ströme und Spannungen berechnet und zur Beeinflussung der Generator-Wirkleistung ausgewertet.

Aus der Druckschrift RABELO B ET AL: "Control of an optimized power flow in wind power plants with doubly-fed induction generators" (PESC'03. 2003 IEEE 34TH. ANNUAL POWER ELECTRONICS SPECIALISTS CONFERENCE. CONFERENCE PROCEEDINGS. ACAPULCO, MEXICO, JUNE 15-19, 2003, ANNUAL POWER ELECTRONICS SPECIALISTS CONFERENCE, NEW YORK, NY: IEEE, US, Bd. VOL. 4 OF 4. CONF. 34, 15. Juni 2003 (2003-06-15), Seiten 1563-1568, XP010648463 ISBN: 0-7803-7754-0) ist ein Verfahren zur Optimierung des Leistungsflusses in Windenergieanlagen mit doppelt gespeistem Asynchron-Generator bekannt. Bei dem bekannten Verfahren wird eine maximale Leistungsaufnahme aus dem Wind und eine optimale Verteilung der Blindleistung zwischen Statorkreis und Netz angestrebt.

Davon ausgehend ist es die Aufgabe der Erfindung, ein Verfahren zum Betreiben einer Windenergieanlage zur Verfügung zu stellen, bei dem unabhängig von den Windverhältnissen eine vorgegebene Blindleistung erreicht werden kann.

Diese Aufgabe wird gelöst durch das Verfahren zum Betreiben einer Windenergieanlage mit den Merkmalen des Patentanspruchs 1.

Das erfindungsgemäße Verfahren bezieht sich auf eine Windenergieanlage mit regelbarer Wirkleistung, wobei jedem Wert der Wirkleistung ein durch eine minimale Blindleistung und eine maximale Blindleistung definiertes Blindleistungsintervall zugeordnet ist und die Ist-Blindleistung innerhalb dieses Intervalls steuerbar ist, wobei das Verfahren vorsieht, die Wirkleistung zu reduzieren, wenn eine Soll-Blindleistung außerhalb des der aktuellen Wirkleistung zugeordneten Blindleistungsintervalls liegt.

Die Soll-Blindleistung wird bei dem erfindungsgemäßen Verfahren also auch dann erreicht, wenn sie außerhalb des bei der aktuellen Wirkleistung einstellbaren Blindleistungsintervalls liegt, in dem die Wirkleistung reduziert wird, wodurch sich das verfügbare Blindleistungsintervall vergrößert. Es wird also unter Umständen die Wirkleistung zugunsten einer höheren Blindleistung verringert und somit die Blindleistung gegenüber der Wirkleistung priorisiert.

Die Soll-Blindleistung kann auf unterschiedliche Weise vorgegeben werden. Möglich ist die Vorgabe einer Soll-Blindleistung als Parameter in der Windenergieanlagensteuerung. Dieser kann lokal, in der Windenergieanlage, eingestellt werden oder über eine zentrale Windparksteuerung. Beide Vorgaben können durch den Windenergieanlagenbetreiber gemacht werden. Alternativ kann eine externe Vorgabe durch einen Stromabnehmer, beispielsweise ein Energieversorgungsunternehmen, erfolgen. Diese externe Vorgabe kann die Soll-Blindleistung unmittelbar, d.h. ohne Mitwirkung des Windenergieanlagenbetreibers, festlegen. Die Vorgabe kann statisch oder zeitabhängig sein, zum Beispiel um unterschiedliche Anforderungen zu unterschiedlichen Uhrzeiten zu erfüllen. Weiterhin kann eine Vorgabe der Soll-Blindleistung in Abhängigkeit von der aktuellen Wirkleistung vorgenommen werden. Hierzu kann eine Funktion definiert sein, die jeder Wirkleistung eine Soll-Blindleistung zuordnet. Ebenfalls möglich ist eine Steuerung der Soll-Blindleistung als Stellgröße bei einer Regelung der Ausgangsspannung. Dabei kann die eingestellte Soll-Blindleistung in Abhängigkeit von einem Sollwert für die Spannung und einer am Ausgang eines Spannungsreglers vorliegenden Spannung erfolgen.

Durch das Verfahren wird erreicht, daß auch bei günstigen Windverhältnissen und einer entsprechend hohen möglichen Wirkleistungsabgabe eine hohe Blindleistung zur Verfügung gestellt werden kann. Auf diese Weise kann die Forderung von Netzbetreibern nach der Bereitstellung einer hohen Blindleistung erfüllt werden. Außerdem können mehrere Windenergieanlagen oder Windparks an schwächere Netze angeschlossen werden, da durch die hohe verfügbare Blindleistung ein größerer Beitrag zur Netzstabilität geleistet werden kann.

Besonders vorteilhaft gegenüber dem aus DE 103 44 392 A1 bekannten Verfahren ist, daß jedem Wert der Wirkleistung eine minimale und einen maximale Blindleistung zugeordnet ist. Diese Blindleistungswerte stehen unmittelbar zur Verfügung und können beispielsweise zur Verbesserung des Netzmanagements an ein Energieversorgungsunternehmen weitergeleitet werden, welches somit einen Überblick über die verfügbare Blindleistungsreserve erhält, die ohne Wirkleistungseinbußen abrufbar ist.

In einer bevorzugten Ausgestaltung der Erfindung wird die Ist-Blindleistung auf die maximale Blindleistung oder auf die minimale Blindleistung des der aktuellen Wirkleistung zugeordneten Blindleistungsintervalls gesteuert und die Wirkleistung nicht reduziert, wenn die Soll-Blindleistung außerhalb dieses Blindleistungsintervalls und die aktuelle Wirkleistung kleiner als eine vorgegebene minimale Wirkleistung ist. Ein bestimmtes, vorgegebenes Wirkleistungsniveau wird daher nicht unterschritten. In diesem Fall kann die geforderte Soll-Blindleistung nicht zur Verfügung gestellt werden. Statt dessen wird derjenige Maximal- bzw. Minimalwert des Blindleistungsintervalls eingestellt, der der geforderten Soll-Blindleistung am nächsten kommt. Dadurch wird erreicht, daß stets zumindest eine minimale Wirkleistung bereitgestellt wird. Es kann somit gezielt ein Kompromiß zwischen der geforderten Soll-Blindleistung und der abgegebenen Wirkleistung gefunden werden, der beispielsweise zu einer optimalen Vergütung führt.

In einer Ausgestaltung erfolgt die Zuordnung der minimalen Blindleistung und der maximalen Blindleistung zu jedem Wert der Wirkleistung auf Grundlage der maximalen Strombelastbarkeit einer Komponente der Windenergieanlage, wobei die Abhängigkeit der maximalen Strombelastbarkeit der Komponente von mindestens einer Betriebsgröße der Windenergieanlage berücksichtigt wird. Die Berücksichtigung dieser Arbeitspunktabhängigkeit der maximalen Strombelastbarkeit ermöglicht eine vollkommenere Ausschöpfung des Leistungsvermögens der Windenergieanlage. Die berücksichtigte Betriebsgröße kann beispielsweise die Drehzahl des Generators sein, die einen Einfluß auf dessen Kühlleistung hat. Bei höheren Drehzahlen steigt die Luftzirkulation im Generator und damit die Kühlleistung, wodurch sich eine erhöhte Strombelastbarkeit des Generators ergibt. Eine weitere berücksichtigte Betriebsgröße kann die Frequenz des Stromflusses im Rotorkreis sein, die im synchronen Betriebspunkt des Generators nahe Null liegt.

Derartig niedrige Frequenzen führen zu einer gleichstromartigen Belastung des Rotorkreises, insbesondere der zugehörigen Halbleiterschalter des Umrichters, so daß sich die Strombelastbarkeit aufgrund thermischer Effekte verringern kann. Im unter- oder übersynchronen Betrieb erhöht sich die Strombelastbarkeit demgegenüber, so daß entsprechend größere Blindleistungsintervalle ausgeschöpft werden können. Die mindestens eine Betriebsgröße kann mit der Wirkleistung verknüpft sein. Dies ist beispielsweise für die Generatordrehzahl der Fall. Daher kann die mindestens eine Betriebsgröße in der Zuordnung der minimalen und maximalen Blindleistung zur Wirkleistung implizit berücksichtigt werden, d.h. daß jeder Wirkleistung ein Blindleistungsintervall eindeutig zugeordnet ist. Alternativ kann die mindestens eine Betriebsgröße als zusätzlicher Parameter bei der Auswertung der Zuordnungsvorschrift einfließen. In diesem Fall handelt es sich bei der Zuordnung um eine mehrparametrige Zuordnung im Sinne eines Kennlinienfelds. Werden mehrere Betriebsgrößen berücksichtigt, kann jeder Betriebsgröße ein separater Parameter zugeordnet sein. Gegebenenfalls können zur Auswertung der Zuordnungsvorschrift Meßwerte der Betriebsgrößen herangezogen werden.

In einer Ausgestaltung erfolgt die Zuordnung der minimalen Blindleistung und der maximalen Blindleistung zu jedem Wert der Wirkleistung auf Grundlage der maximalen Strombelastbarkeit einer Komponente der Windenergieanlage, wobei die Abhängigkeit der maximalen Strombelastbarkeit der Komponente von mindestens einer Umgebungsbedingung der Windenergieanlage berücksichtigt wird. Die Umgebungsbedingungen können wie die vorstehend diskutierten Betriebsgrößen in die Zuordnungsvorschrift einfließen. Umgebungsbedingungen mit einem spürbaren Einfluß auf die Strombelastbarkeit sind beispielsweise die Temperatur, die Windgeschwindigkeit oder der Luftdruck.

In einer weiteren bevorzugten Ausgestaltung der Erfindung wird die minimale Blindleistung und die maximale Blindleistung für jede Wirkleistung aus der zulässigen Strombelastbarkeit der Stator- und Rotorwicklungen des Generators der Windenergieanlage berechnet. Die Strombelastbarkeit der einzelnen Komponenten kann dabei von weiteren Parametern abhängig sein. Insbesondere kann, wie vorstehend bereits erläutert, die verfügbare Kühlleistung und/oder die Umgebungstemperatur berücksichtigt werden, um eine thermische Überlastung zu vermeiden. Die Kühlleistung kann ihrerseits vom Windangebot und der Wirkleistung abhängig sein. Die Strombelastbarkeit der genannten Wicklungen stellt eine wesentliche obere Grenze für die Strombelastbarkeit der gesamten Windenergieanlage dar. Es wird dadurch erreicht, daß die Stator- und Rotorwicklungen des Generators nicht überlastet werden.

Gemäß einer weiteren bevorzugten Ausgestaltung der Erfindung wird die minimale Blindleistung und die maximale Blindleistung für jede Wirkleistung aus der zulässigen Strombelastbarkeit sämtlicher stromführender Komponenten der Windenergieanlagen berechnet. Die stromführenden Komponenten umfassen dabei sämtliche im Stromkreis zwischen Generator und Versorgungsnetz befindlichen Bestandteile der Windenergieanlage, insbesondere die Halbleiterschalter des Umrichters. Durch diese Berechnung des Blindleistungsintervalls wird sichergestellt, daß nicht nur die Rotor- und Statorwicklungen des Generators vor einer Überlastung geschützt werden, sondern sämtliche stromführenden Komponenten. Auf eine anderenfalls gegebenenfalls als Vorsichtsmaßnahme vorgesehene Überdimensionierung zum Beispiel des Umrichters kann daher verzichtet werden.

Gemäß einer Ausgestaltung ist ein Steuerungsparameter vorgesehen, der zwei unterschiedliche Werte annehmen kann, wobei das Verfahren bei einem ersten Wert des Steuerungsparameters ausgeführt und die Wirkleistung gegebenenfalls reduziert wird, während bei einem zweiten Wert des Steuerungsparameters keine Reduzierung der Wirkleistung erfolgt. Hat der Steuerungsparameter den ersten Wert, wird die Blindleistung gegenüber der Wirkleistung priorisiert, wie oben erläutert. Hat er den zweiten Wert, kann insbesondere die Wirkleistung gegenüber der Blindleistung priorisiert werden. Die Einstellung des Steuerungsparameters kann per Software erfolgen, entweder lokal in der Windenergieanlage oder zentral von einer Windparksteuerung aus. Die Wahl des Wertes für den Steuerungsparameter kann sich beispielsweise nach den Anforderungen eines Stromabnehmers und/oder den Vergütungsregeln für eingespeiste Wirk- und Blindleistung richten.

Die Erfindung wird nachfolgend anhand eines in zwei Figuren dargestellten Ausführungsbeispiels näher erläutert. Es zeigen:

Fig. 1    ein Diagramm mit der Zuordnung von Blindleistungsintervallen zu der Wirkleistung,

Fig. 2    ein Diagramm mit Zeitverlauf der Wirk- und Blindleistung bei Verwendung des erfindungsgemäßen Verfahrens.

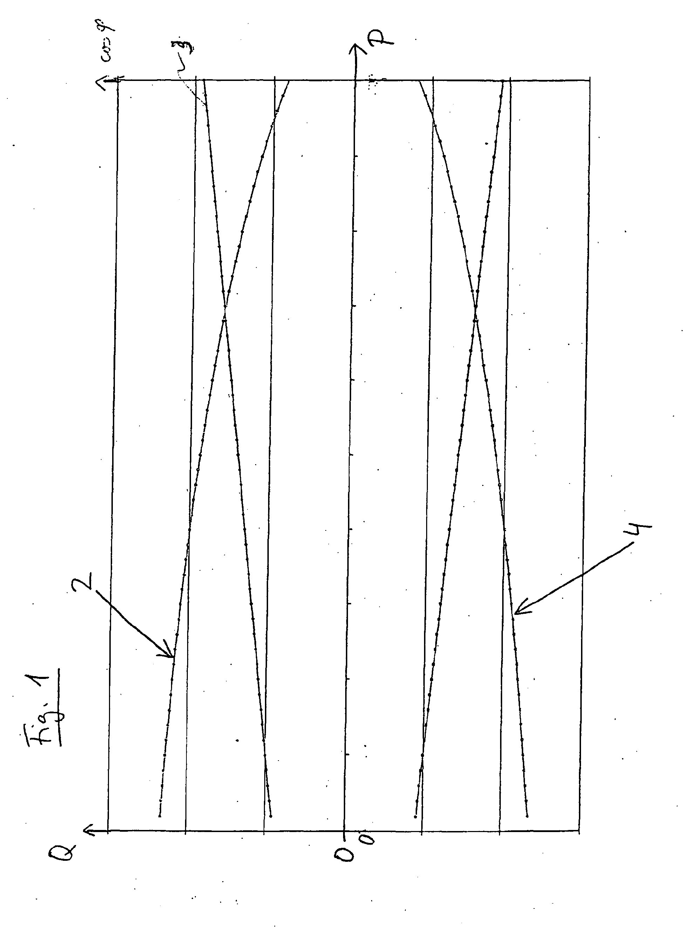

In Fig. 1 ist der Zusammenhang zwischen Blindleistung Q und Wirkleistung P dargestellt.

Auf der Abszisse ist die Wirkleistung P aufgetragen. Der dargestellte Wirkleistungsbereich beginnt bei Null und erstreckt sich bis hin zu einer maximalen Wirkleistung, die gegebenenfalls die Nennleistung der Windenergieanlage um ein bestimmtes Maß überschreitet. Auf der Ordinate ist jeder Wirkleistung P eine maximale Blindleistung Q (Kurve 2) und eine minimale Blindleistung Q (Kurve 4) zugeordnet. Die Beträge der in den Kurven 2 und 4 einem bestimmten Wirkleistungswert zugeordneten minimalen und maximalen Blindleistungen entsprechen einer abgegebenen bzw. aufgenommenen Blindleistung, was einer kapazitiven bzw. induktiven Blindleistung entspricht. Die Beträge müssen nicht gleich sein.

Die Kurven 2 und 4 sind unter Berücksichtigung der zulässigen Strombelastbarkeiten sämtlicher relevanter Komponenten der Windenergieanlage ermittelt worden. Insbesondere sind die Strombelastbarkeiten und die thermischen Belastbarkeiten der Rotor- und Statorwicklungen sowie des Umrichters eingeflossen. Im Ergebnis zeigen die Kurven 2 und 4 einen Verlauf, der annähernd einer Wurzelfunktion gleicht. Einen exakt einer Wurzelfunktion gleichenden Verlauf erhielte man, wenn man zur Berechnung der zulässigen Blindleistungen lediglich eine konstante Scheinleistung in Ansatz bringen würde.

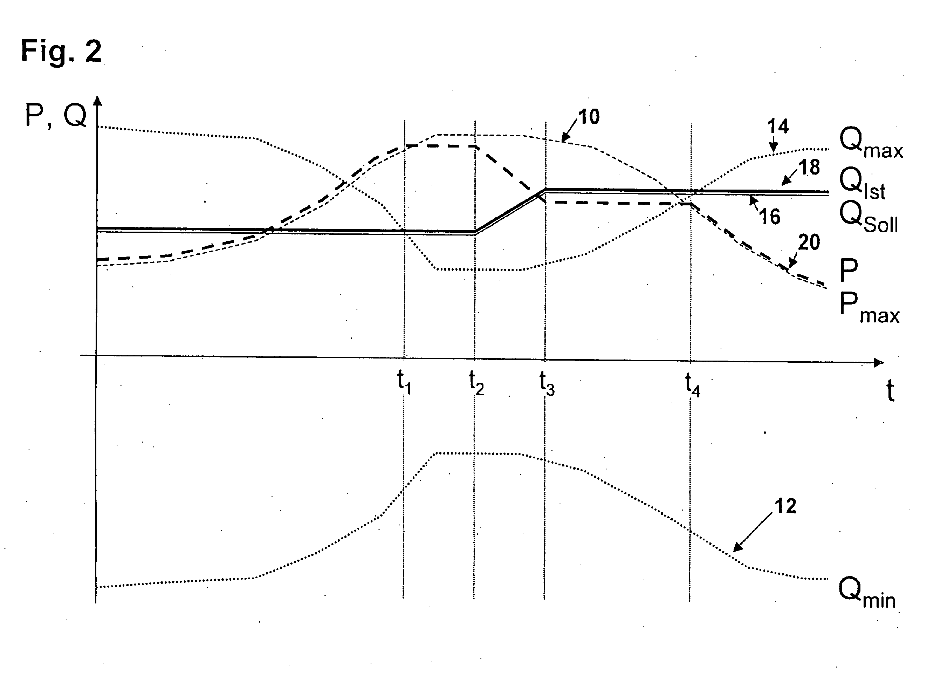

In der Fig. 2 ist die Wirkungsweise der erfindungsgemäßen Leistungssteuerung im Zeitverlauf dargestellt.

Die gestrichelt dargestellte Kurve 10 gibt dabei eine sich aus dem Windangebot ergebende maximale Wirkleistung $P_{max}$ an. In dem in dem Diagramm dargestellten Zeitabschnitt durchläuft diese theoretisch mögliche maximale Wirkleistung beginnend von relativ niedrigen Werten ein um den Zeitpunkt $t_2$ herum liegendes Maximum und sinkt schließlich wieder ab.

Nach Maßgabe des in der Fig. 1 dargestellten Zusammenhangs zwischen der Wirkleistung und der maximalen bzw. minimalen Blindleistung sind in dem Diagramm der Fig. 2 ausgehend von der Kurve 10 die beiden gepunktet dargestellten Kurven für die minimale Blindleistung $Q_{min}$ (Kurve 12) und die maximale Blindleistung $Q_{max}$ (Kurve 14) dargestellt. Jedem Zeitpunkt ist somit ein von der maximal möglichen Wirkleistung $P_{max}$ (Kurve 10) abhängiges Blindleistungsintervall zwischen den beiden Kurven 12 und 14 zugeordnet. Es ist leicht ersichtlich, daß dieses Intervall bei geringer maximal möglicher Wirkleistung $P_{max}$ größer ist als bei einer vergleichsweise großen maximal möglichen Wirkleistung $P_{max}$.

Weiterhin ist als dünne durchgezogene Linie 16 in dem Diagramm eine vorgegebene Soll-Blindleistung $Q_{Soll}$ (Kurve 16) darstellt. Diese Soll-Blindleistung entspricht einer externen Vorgabe. Die dargestellte Soll-Blindleistung verläuft bis zum Zeitpunkt $t_2$ auf einem ersten, konstanten Niveau, erhöht sich dann bis zum Zeitpunkt $t_3$ und verläuft anschließend auf einem zweiten konstanten Niveau.

Die Wirkungsweise der erfindungsgemäßen Steuerung wird nunmehr an den fett dargestellten Kurven 18 und 20, die die tatsächlich abgegebene Blindleistung $Q_{Ist}$ (durchgezogene Kurve 18) und Wirkleistung P (gestrichelte Kurve 20) darstellen.

Die abgegebene Blindleistung $Q_{Ist}$ entspricht während des gesamten Zeitverlaufs der vorgegebenen Blindleistung $Q_{Soll}$. Es erfolgt eine Regelung der abgegebenen Blindleistung auf den vorgegebenen Sollwert $Q_{Soll}$. Der geringfügige Versatz der beiden Kurven 16 und 18 dient lediglich der besseren Erkennbarkeit.

Die abgegebene Wirkleistung P entspricht nur teilweise der maximal möglichen Wirkleistung $P_{max}$. In dem Zeitintervall zwischen $t_1$ und $t_4$ ist die abgegebene Wirkleistung P geringer als die theoretisch mögliche Wirkleistung $P_{max}$. Die Abweichung beginnt zum Zeitpunkt $t_1$. Zu dieser Zeit sinkt die bei der maximal möglichen Wirkleistung $P_{max}$ durch die Kurve 14 dargestellte Obergrenze des erreichbaren Blindleistungsintervalls unter die vorgegebene Blindleistung $Q_{Soll}$ (Kurve 16). Daher wird die Wirkleistung P gegenüber der maximal möglichen Wirkleistung $P_{max}$ reduziert. Sie verläuft bis

zum Zeitpunkt $t_2$ auf einem konstanten Wert. Dieser Wert entspricht demjenigen Wirkleistungswert, bei dem die Obergrenze des Blindleistungsintervalls der Soll-Blindleistung entspricht, d.h. dem zum Zeitpunkt $t_1$ dargestellten Wert.

Beginnend zur Zeit $t_2$ wird die Soll-Blindleistung erhöht. Diese geforderte Soll-Blindleistung kann bei der zum Zeitpunkt $t_2$ abgegebenen Wirkleistung P nicht erreicht werden, weil sie außerhalb des dieser Wirkleistung zugeordneten Blindleistungsintervalls liegt. Deshalb wird die abgegebene Wirkleistung P bis zum Zeitpunkt $t_3$ weiter reduziert. Dadurch kann die abgegebene Blindleistung $Q_{Ist}$ entsprechend dem Sollwert $Q_{Soll}$ erhöht werden.

Zum Zeitpunkt $t_3$ nimmt die vorgegebene Soll-Blindleistung wieder einen konstanten Wert an. Entsprechend bleibt auch die Wirkleistung P auf einem konstanten Niveau, das mit der geforderten Soll-Blindleistung vereinbar ist. Zum Zeitpunkt $t_4$ ist infolge eines sinkenden Windangebots die maximal erzeugbare Wirkleistung $P_{max}$ bis auf den aktuellen Wert P zum Zeitpunkt $t_4$ abgesunken. Nachfolgend reduziert sich die maximal mögliche Wirkleistung $P_{max}$ infolge des nachlassenden Windangebots weiter. In diesem Fall folgt die tatsächlich bereitgestellte Wirkleistung P dem maximal möglichen Niveau $P_{max}$. Die abgegebene Blindleistung $Q_{Ist}$ bleibt dabei auf dem Niveau des Soll-Blindleistungswerts, der ab dem Zeitpunkt $t_4$ wieder innerhalb des der maximal möglichen Wirkleistung $P_{max}$ zugeordneten Blindleistungsintervalls liegt.

**Patentansprüche**

1. Verfahren zum Betreiben einer Windenergieanlage mit regelbarer Wirkleistung, bei dem die Ist-Blindleistung (18) innerhalb eines Blindleistungsintervalls steuerbar ist, **dadurch gekennzeichnet, dass**

   - jedem Wert der Wirkleistung (20) ein Blindleistungsintervall zugeordnet ist, das durch eine minimale Blindleistung (12) entsprechend einer induktiven Blindleistung und eine maximale Blindleistung (14) entsprechend einer kapazitiven Blindleistung definiert ist, wobei die Zuordnung der minimalen Blindleistung und der maximalen Blindleistung zu jedem Wert der Wirkleistung auf Grundlage der maximalen Strombelastbarkeit einer Komponente der Windenergieanlage erfolgt und die maximale Strombelastbarkeit der Komponente abhängig von der Drehzahl des Generators, dessen Strombelastbarkeit infolge höherer Kühlleistung mit der Drehzahl des Generators steigt, und/oder abhängig von der Frequenz des Stromflusses im Rotorkreis, dessen Strombelastbarkeit bei niedrigen Frequenzen nahe Null verringert ist, vorgegeben wird, und

   - die Wirkleistung (20) reduziert wird, wenn eine Soll-Blindleistung (16) außerhalb des der aktuellen Wirkleistung zugeordneten Blindleistungsintervalls liegt.

2. Verfahren zum Betreiben einer Windenergieanlage mit regelbarer Wirkleistung, bei dem die Ist-Blindleistung (18) innerhalb eines Blindleistungsintervalls steuerbar ist, **dadurch gekennzeichnet, dass**

   - jedem Wert der Wirkleistung (20) ein Blindleistungsintervall zugeordnet ist, das durch eine minimale Blindleistung (12) entsprechend einer induktiven Blindleistung und eine maximale Blindleistung (14) entsprechend einer kapazitiven Blindleistung definiert ist, wobei die Zuordnung der minimalen Blindleistung und der maximalen Blindleistung zu jedem Wert der Wirkleistung auf Grundlage der maximalen Strombelastbarkeit einer Komponente der Windenergieanlage erfolgt und die maximale Strombelastbarkeit der Komponente abhängig von der Drehzahl des Generators, dessen Strombelastbarkeit infolge höherer Kühlleistung mit der Drehzahl des Generators steigt, und/oder abhängig von der Frequenz des Stromflusses im Rotorkreis, dessen Strombelastbarkeit bei niedrigen Frequenzen nahe Null verringert ist, vorgegeben wird,

   - wobei, wenn eine Soll-Blindleistung (16) außerhalb des der aktuellen Wirkleistung zugeordneten Blindleistungsintervalls liegt und die aktuelle Wirkleistung nicht kleiner ist als eine vorgegebene minimale Wirkleistung, die Wirkleistung reduziert wird, und,

   - wenn die Soll-Blindleistung (16) außerhalb des der aktuellen Wirkleistung zugeordneten Blindleistungsintervalls liegt und die aktuelle Wirkleistung kleiner als die vorgegebene minimale Wirkleistung ist, die Wirkleistung nicht reduziert wird und die Ist-Blindleistung auf die maximale Blindleistung oder auf die minimale Blindleistung des der aktuellen Wirkleistung zugeordneten Blindleistungsintervalls gesteuert wird.

3. Verfahren nach einem der Ansprüche 1 oder 2, **dadurch gekennzeichnet, dass** die Zuordnung der minimalen Blindleistung und der maximalen Blindleistung zu jedem Wert der Wirkleistung auf Grundlage der maximalen Strombelastbarkeit einer Komponente der Windenergieanlage erfolgt, wobei die Abhängigkeit der maximalen Strombelastbarkeit der Komponente von mindestens einer Umgebungsbedingung der Windenergieanlage berücksichtigt wird.

4. Verfahren nach einem der Ansprüche 1 bis 3, **dadurch gekennzeichnet, dass** die minimale Blindleistung und die maximale Blindleistung für jede Wirkleistung aus der zulässigen Strombelastbarkeit der Stator- und Rotorwicklungen des Generators der Windenergieanlage berechnet wird.

5. Verfahren nach einem der Ansprüche 1 bis 4, **dadurch gekennzeichnet, dass** die minimale Blindleistung und die maximale Blindleistung für jede Wirkleistung aus der zulässigen Strombelastbarkeit sämtlicher Strom führender Komponenten der Windenergieanlage berechnet wird.

6. Verfahren nach einem der Ansprüche 1 bis 5, **dadurch gekennzeichnet, dass** ein Steuerungsparameter vorgesehen ist, der zwei unterschiedliche Werte annehmen kann, wobei das Verfahren bei einem ersten Wert des Steuerungsparameters ausgeführt und die Wirkleistung gegebenenfalls reduziert wird, während bei einem zweiten Wert des Parameters keine Reduzierung der Wirkleistung erfolgt.

**Claims**

1. Method of operating a wind power plant with a controllable active power, in which the actual reactive power (18) can be controlled within an actual reactive power interval, **characterized in that**

   • a reactive power interval defined by a minimum reactive power (12) corresponding to an inductive reactive power and a maximum reactive power (14) corresponding to a capacitive reactive power is assigned to each value of the active power (20), wherein the assignment of the minimum reactive power and the maximum reactive power to each value of the active power takes place based on the maximum current carrying capacity of a component of the wind power plant and the maximum current carrying capacity of the component is predetermined, depending on the speed of the generator, which current carrying capacity increases according to a rising cooling capacity with increasing speed of the generator, and/or depending on the frequency of the current flow in the rotor circuit, which current carrying capacity is reduced for frequencies close to zero, and
   • the active power (20) is reduced when a target reactive power (16) lies outside of the reactive power interval assigned to the current active power.

2. Method of operating a wind power plant with a controllable active power, for which the actual reactive power (18) can be controlled within an actual reactive power interval, **characterized in that**

   • a reactive power interval defined by a minimum reactive power (12) corresponding to an inductive reactive power and a maximum reactive power (14) corresponding to a capacitive reactive power is assigned to each value of the active power (20), wherein the assignment of the minimum reactive power and the maximum reactive power to each value of the active power takes place based on the maximum current carrying capacity of a component of the wind power plant and the maximum current carrying capacity of the component is predetermined, depending on the speed of the generator, which current carrying capacity increases according to a rising cooling capacity with increasing speed of the generator, and/or depending on the frequency of the current flow in the rotor circuit, which current carrying capacity is reduced for frequencies close to zero,
   • wherein the active power is reduced when a target reactive power (16) lies outside of the reactive power interval assigned to the current active power and the current active power is not smaller than a specified minimum active power, and
   • the active power is not reduced and the actual reactive power is controlled to the maximum reactive power or to the minimum reactive power of the reactive power interval assigned to the current active power when the target reactive power (16) lies outside of the reactive power interval assigned to the current active power and the current active power is smaller than the specified minimum active power.

3. Method according to claim 1 or 2, **characterized in that** the assignment of the minimum reactive power and the maximum reactive power to each value of the active power takes place based on the maximum current carrying capacity of a component of the wind power plant, wherein the dependency of the maximum current carrying capacity of the components is taken into consideration by at least one operating variable of the wind power plant.

4. Method according to one of claims 1 through 3, **characterized in that** the minimum reactive power and the maximum reactive power for each active power are calculated from the permissible current carrying capacity of the stator and rotor coils of the generator of the wind power plant.

5. Method according to one of claims 1 through 4, **characterized in that** the minimum reactive power and the maximum reactive power for each active power are calculated from the permissible current carrying capacity of all current-carrying components of the wind power plant.

6. Method according to one of claims 1 through 5, **characterized in that** a control parameter is provided, which can accept two different values, wherein the method is executed for a first value of the control parameter and the active power may be reduced, while no reduction of the active power takes place for a second value of the parameter.

**Revendications**

1. Procédé de fonctionnement d'une éolienne avec puissance active réglable, dans lequel la puissance réactive réelle (18) est contrôlable dans un intervalle de la puissance réactive, **caractérisé en ce que**

    • à chaque valeur de la puissance active (20) est associé un intervalle de la puissance réactive qui est défini par une puissance réactive minimale (12) correspondant à une puissance réactive inductive et par une puissance réactive maximale (14) correspondant à une puissance réactive capacitive, le classement de la puissance réactive minimale et de la puissance réactive maximale à chaque valeur de la puissance active se faisant sur la base de la charge admissible de courant maximale d'un composant de l'éolienne, et que la charge admissible de courant maximale est prescrite en fonction de la vitesse de rotation du générateur, dont la charge admissible en courant accroit avec la vitesse de rotation du générateur à cause de la puissance frigorifique accrue, et/ou en fonction de la fréquence du courant dans le circuit de rotor, dont la charge admissible en courant est réduite dans des fréquences basses près de zéro, et
    • la puissance active (20) est réduite quand une puissance réactive exigée (16) est en dehors de l'intervalle de la puissance réactive associé à la puissance active réelle.

2. Procédé de fonctionnement d'une éolienne avec puissance active réglable, dans lequel la puissance réactive réelle (18) est contrôlable dans un intervalle de la puissance réactive, **caractérisé en ce que**

    • à chaque valeur de la puissance active (20) est associé un intervalle de la puissance réactive qui est défini par une puissance réactive minimale (12) correspondant à une puissance réactive inductive et par une puissance réactive maximale (14) correspondant à une puissance réactive capacitive, le classement de la puissance réactive minimale et de la puissance réactive maximale à chaque valeur de la puissance active se faisant sur la base de la charge admissible de courant maximale d'un composant de l'éolienne, et que la charge admissible de courant maximale est prescrite en fonction de la vitesse de rotation du générateur, dont la charge admissible en courant accroit avec la vitesse de rotation du générateur à cause de la puissance frigorifique accrue, et/ou en fonction de la fréquence du courant dans le circuit de rotor, dont la charge admissible en courant est réduite dans des fréquences basses près de zéro, et
    • dans lequel quand une puissance réactive exigée (16) est en dehors de l'intervalle de la puissance réactive associé à la puissance active réelle et la puissance active réelle n'est plus petite que une puissance active prescrite, la puissance active est réduite, et
    • quand la puissance réactive exigée (16) est en dehors de l'intervalle de la puissance réactive associé à la puissance active réelle et la puissance active réelle est plus petite que la puissance active minimale prescrite, la puissance active n'est pas réduite, et la puissance réactive réelle est réglée sur la puissance réactive maximale ou sur la puissance réactive minimale de l'intervalle de la puissance réactive associé à la puissance active réelle.

3. Procédé selon l'une quelconque des revendications 1 ou 2, **caractérisé en ce que** le classement de la puissance réactive minimale et de la puissance réactive maximale à chaque valeur de la puissance active se fait sur la base de la charge admissible de courant maximale d'un composant de l'éolienne, en considérant la dépendance de la charge admissible de courant maximale du composant d'au moins une condition de l'environnement de l'éolienne.

4. Procédé selon l'une quelconque des revendications 1 à 3, **caractérisé en ce que** la puissance réactive minimale et la puissance réactive maximale sont calculées pour chaque puissance active de la charge admissible de courant des bobinages du stator et du rotor du générateur de l'éolienne.

5. Procédé selon l'une quelconque des revendications 1 à 3, **caractérisé en ce que** la puissance réactive minimale et la puissance réactive maximale sont calculées pour chaque puissance active à partir de la charge admissible de courant de tous les composants de l'éolienne qui conduisent du courant.

6. Procédé selon l'une quelconque des revendications 1 à 3, **caractérisé en ce que** un paramètre de réglage est pourvu qui peut prendre deux valeurs différentes, le procédé étant exécuté dans une première valeur du paramètre de réglage et en cas échéant la puissance active étant réduite, tandis que dans une deuxième valeur du paramètre, aucune réduction de la puissance active n'est pas faite.

Fig. 1

EP 1 892 412 B1

**Fig. 2**

EP 1 892 412 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10059018 A1
- EP 1508951 A1
- DE 10344392 A1

- DE 101
- DE 36974 A1
- DE 10019362 A1


**In der Beschreibung aufgeführte Nicht-Patentliteratur**

- **TAPIA G et al.** A new simple and robust control strategy for wind farm reactive power regulation. *PROCEEDINGS OF THE 2002 IEEE INTERNATIONAL CONFERENCE ON CONTROL APPLICATIONS. CCA 2002.,* 18. September 2002, vol. 2, 880-885

- **RABELO B et al.** Control of an optimized power flow in wind power plants with doubly-fed induction generators. *PESC'03. 2003 IEEE 34TH. ANNUAL POWER ELECTRONICS SPECIALISTS CONFERENCE. CONFERENCE PROCEEDINGS,* 15. Juni 2003, vol. 4, 1563-1568